Europäisches Patentamt

European Patent Office

Office européen des brevets

(19)

(11) Publication number: **0 207 966**

**B1**

(12) # EUROPEAN PATENT SPECIFICATION

(45) Date of publication of patent specification: **08.11.89**

(51) Int. Cl.⁴: **H 02 H 7/06**

(21) Application number: **86900556.1**

(22) Date of filing: **19.12.85**

(86) International application number:
**PCT/US85/02548**

(87) International publication number:
**WO 86/04187 17.07.86 Gazette 86/17**

(54) **GENERATING SYSTEM WITH FAULT DETECTION.**

(30) Priority: **08.01.85 US 689764**

(43) Date of publication of application:
**14.01.87 Bulletin 87/03**

(45) Publication of the grant of the patent:
**08.11.89 Bulletin 89/45**

(84) Designated Contracting States:
**DE FR GB IT**

(56) References cited:
**US-A-4 327 410**
**US-A-4 486 801**
**US-A-4 523 295**

(73) Proprietor: **SUNDSTRAND CORPORATION**
**4751 Harrison Avenue P.O. Box 7003**
**Rockford, Illinois 61125 (US)**

(72) Inventor: **SHEPLER, John, E.**
**5653 Weymouth Drive**
**Rockford, IL 61108 (US)**
Inventor: **ZUR, Dov**
**19 Cannonball Drive**
**Howell, NJ 07731 (US)**

(74) Representative: **SERJEANTS**
**25, The Crescent King Street**
**Leicester, LE1 6RX (GB)**

Courier Press, Leamington Spa, England.

## Description

This invention relates to a generating system, and more particularly, to a generating system provided with means for detecting the existence of a fault therein and for responding to such detection to disconnect parts of the system to prevent the damage that would be occasioned by the existence of a fault.

When a fault develops in a generating system, the resulting excessive load on the system caused by the fault can cause grave damage to the system as a result of overheating or other associated problems. While the problems associated with the development of faults are of concern in almost all generating systems, they may be particularly acute in the generating systems employed in aircraft having high electrical power requirements. In particular, aircraft generating systems are quite expensive in relation to their generating capacity and if damage is sustained as a result of a fault, it is commensurately more expensive to repair. Moreover, in many instances, the economical operation of aircraft depends upon a high rate of utilization of such aircraft. Consequently, excessive down time of the aircraft for repair of fault caused damage to a generating system may severely impede efficient use of such aircraft.

Consequently, such power systems must be provided with control units that are capable of detecting faults and in turn, prevent the fault condition from causing the generator to cycle on and off continuously, a phenomenon sometimes termed "doorbelling".

A particularly troublesome fault condition in generating systems is that occasioned by a short circuit to electrical ground on the supply side of the generator exciter field winding. In a typical generating system, a permanent magnet generator provides power for the control unit and to a rectifier bridge which in turn conveys power to the exciter field winding of the main generator. Typically, the control unit operates an electrically held relay which opens contacts in the exciter field supply circuit when a fault detector determines that a fault condition exists. Such a system is described in US 4486801 (Jackovich). When the relay is closed, power is supplied to the exciter field winding. Conversely, when the relay is opened, power is removed from the exciter field winding.

Alternatively, the control unit of a system can operate an electrically held relay which opens contacts in the exciter field supply when power is removed from the control unit. Under normal conditions, the control unit will cause the relay to close to connect the exciter field winding into the circuit. Should a fault occur, the resulting load causes the permanent magnet generator to be extremely heavily loaded and its voltage output is accordingly greatly reduced. The permanent magnet generator will not develop sufficient voltage to power the control unit and as a consequence, it cannot continue to command the relay to maintain a closed condition and the relay opens.

When the relay opens, the heavy loading on the permanent magnet generator ceases to exist and the permanent magnet generator then provides a full voltage output. At this point, the control unit receives enough voltage to resume operation and causes the relay to close. As a consequence, the voltage at the output of the permanent magnet generator again becomes greatly reduced because of the heavy loading caused by the reconnected fault. Sufficient voltage to power the control unit is again lost and the relay will again open.

This continuous cycling will occur indefinitely until there is manual intervention.

To avoid this problem, in some prior instances, an auxiliary source of power whose voltage is independent of the output of the permanent magnet generator is utilized to provide power to the control unit. When such is used, when the control unit opens the relay in response to the detection of a fault, the relay will remain open so long as the control unit is powered by the auxiliary source of power and is unaffected by the immediate increase in output voltage at the permanent magnet generator upon disconnection of the fault therefrom.

While this approach represents a solution to doorbelling, it requires the presence of an auxiliary source of power; and such may not be readily available, or available at all in various systems.

The present invention is directed to overcoming one or more of the above problems.

The invention provides a fault protection control circuit for use in a generating system having an exciter, a permanent magnet generator for providing electrical power to the exciter, an electrically controllable switch for selectively connecting or disconnecting the permanent magnet generator to or from the exciter, and comprising computing circuit means for controlling the switch, the computing circuit means being incapable of closing the switch and connecting the exciter to the permanent magnet generator when a fault exists and the permanent magnet generator is heavily loaded, and characterised in that

the computing circuit means is powered by the permanent magnet generator,

the computing circuit means is connected to the permanent magnet generator independently of the switch,

the computing circuit means has a memory device whose state is unaffected by the presence or absence of power,

the memory device is connected to be read, written or erased by the computing circuit means,

the computing circuit means a) at or near the beginning of the generating cycle of the system writes in the memory device a particular flag and b) upon the conclusion of the generating cycle erases from the memory device the particular flag, and

the computing circuit means upon receiving power from the permanent magnet generator following as a result of a fault a disconnection of the power supply to the exciter from the permanent magnet generator reads the memory device for the particular flag and in the presence of the particular flag does not close the switch and in the absence of the particular flag closes the switch.

The invention may include manual means for erasing the information from the memory.

The computing means is preferably a microprocessor and the memory device is preferably an eraseable, programmable read only memory.

Fig. 1 is a schematic of an electrical generating system embodying the invention;

Fig. 2 is a block diagram of a microprocessor or microcomputer that may be used as part of the invention; and

Fig. 3 is a flow diagram of a program routine for the microcomputer which implements the invention.

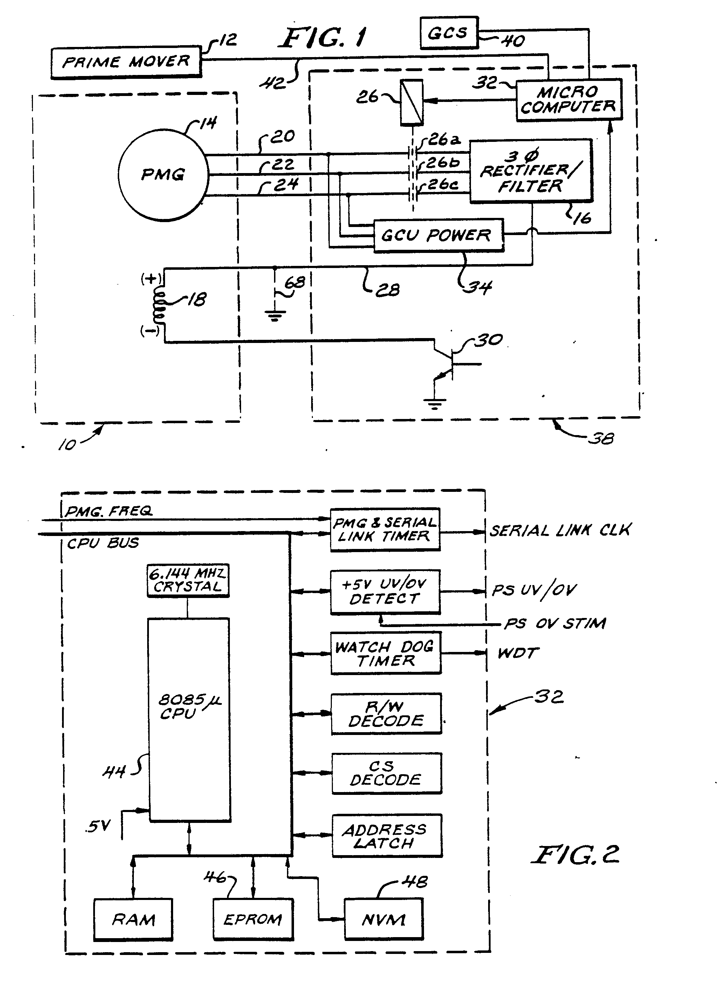

An exemplary embodiment of the invention is illustrated in the drawings and with reference to Fig. 1 is seen to include a generating system, generally designated 10.

The generating system is driven by a prime mover shown schematically at 12 as; for example, an aircraft engine.

In the usual case, the generating system 10 will be of the so-called brushless variety. Typically, such a generating system will include a permanent magnet generator 14 and in the usual case the same will provide a three phase alternating current output. The output of the permanent magnet generator 14 is rectified by a three phase full wave rectifier bridge 16 and the resulting direct current provided to the field winding 18 of an exciter. The exciter in turn will provide alternating current, usually three phase, to a rotating rectifying device (not shown) which in turn provides direct current to the main field winding of a main generator rotor (not shown). A stator forming part of the main generator provides power to electrical components requiring it.

The permanent magnet generator 14 is connected to the rectifier 16 by three lines 20, 22, 24, one for each phase. The lines 20, 22 and 24 respectively include electrical contacts 26a, 26b, and 26c of a relay 26. The relay 26 is of the normally open variety and acts as electrically operated switch controlling the flow of electrical energy from the permanent magnet generator to the rectifier bridge 16 and then to the exciter field winding 18. The latter is connected to the rectifier bridge 16 by a line 28 and to ground via a field regulator transistor 30 which controls of the flow of power through the exciter winding 18 in a conventional fashion.

The relay 26 is driven by a computing circuit or microcomputer 32. The microcomputer 32 is powered by a generator control unit power unit 34 which in turn is connected to the output of the permanent magnet generator 14, that is, to the lines 20, 22 and 24, at a location between the permanent magnet generator 14 and the contacts 26a, 26b and 26c. Consequently, the power unit 34 is powered by the permanent magnet generator regardless of whether the relay 26 is operated to close the contact 26a, 26b and 26c.

The relay 26, microcomputer 32, the rectifier bridge 16 and the power unit 34 along with the field regulator transistor 30 make up a generator control unit, generally designated 38.

The generator control unit 38 may receive inputs of various sorts. For the purposes of the present invention, two are of concern. A first is a manual input from a generator control switch 40 which is directed to the microcomputer 32. A second is an input from the prime mover 12 on a line 42 which is likewise directed to the microcomputer 32.

The manual switch 40 may be operated in a variety of ways. For example, it may be utilized to override the fault detection and protection system of the present invention. It might also be utilized as a control to prevent the system from being cycled without manual actuation.

The input on the line 42 from the prime mover 12 may be utilized as a signal indicative of whether the prime mover 12 is in operation, i.e., running or shut down, for purposes to be seen.

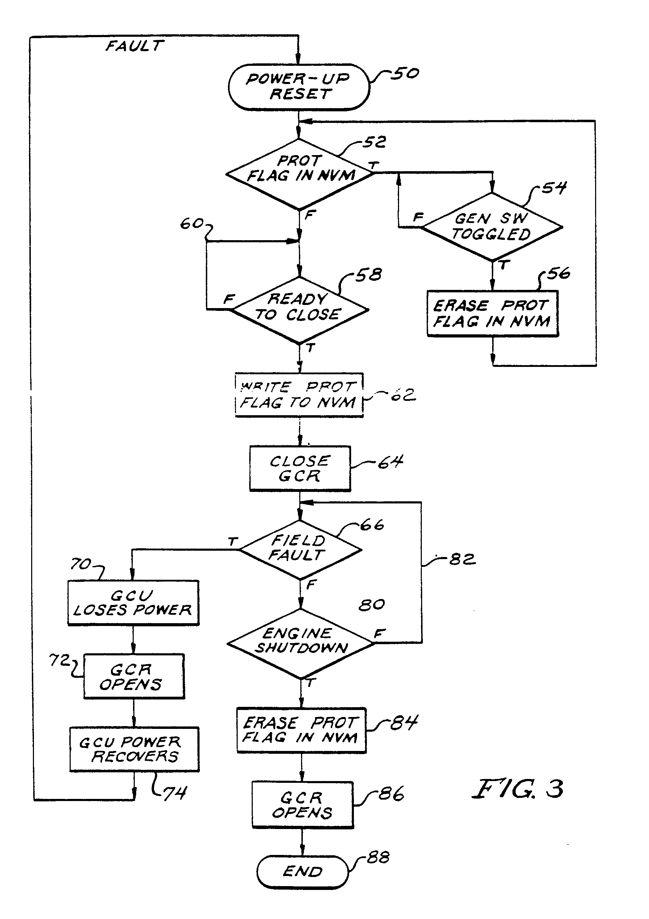

The microcomputer 32 is illustrated in block form in Fig. 2 and is based about a central processing unit 44 such as an Am8085A 8-bit central processing unit available from Advanced Micro Devices. In the usual case, the central processing unit 44 will be performing a number of computational routines necessary for the control of the generating system 10 in addition to those involved with fault detection and a number of the functions schematically illustrated are utilized in connection with such routines. For the purpose of the present invention, it is sufficient to note that the microcomputer 32 includes an EPROM unit 46 in which the program relative to fault detection and operation may be stored and a non-volatile memory 48 for purposes to be seen. As used herein, the term non-volatile memory means a memory device whose memory state may be changed by an appropriate signal provided to it by some component of the system most typically the central processing unit 44 in the preferred embodiment. At the same time, a non-volatile memory cannot have its memory state changed by an interruption of its power supply.

Those skilled in the art will readily recognize that a variety of devices, both mechanical and electrical can be used as a non-volatile memory 48. In the preferred embodiment, however, it is preferred to employ an electrically eraseable programmable read only memory as the non-volatile memory 48 as, for example, an X2804A electrically eraseable, programmable read only memory available from Xicor. The manner in which the non-volatile memory 48 is associated with the central processing unit 44 is achieved through conventional techniques and forms no part of the present invention.

To achieve fault detection and protection according to the invention, the microcomputer 32 is programmed with the routine illustrated in flow chart form in Fig. 3. Upon initiation of a generating cycle, whether an intentionally initiated generating cycle or in a start-up following an interruption as for example, due to the presence of a fault, the program requires a power up reset routine 50 to be performed as is customary. Upon the completion of the operation designated by the block 50, the non-volatile memory 48 is read to determine whether a protection flag, that is, a particular state of the non-volatile memory, exists therein as shown at block 52. If a flag exists, the program branches to determine whether the generator control switch 40 has been toggled as indicated at block 54. Where the toggling of the switch 40 is such as to call for override of the protection program, if the switch has been toggled, as shown at block 56, the central processing unit 44 is directed to erase the protection flag in the non-volatile memory 48 and execute the loop illustrated. Conversely, if the switch 40 has not been toggled, the program repetitively cycles in the closed loop illustrated until such toggling of the switch 40 occurs.

If no protection flag has been written in the non-volatile memory 48, the program proceeds to block 58 where an inquiry is made as to whether all other system parameters are such as to ready the system for operation. If not, a closed loop 60 is repetitively followed until the system is ready for operation.

Upon that occurrence, the system then writes a protection flag in the non-volatile memory 48 as shown by block 62. Following such writing, the system operates to energize the relay 26 and close the contacts 26a, 26b and 26c as shown by block 64. This, of course, connects the permanent magnet generator 14 to the exciter field winding 18.

After the relay 26 has been energized, the system proceeds to a block 66 which is indicative of the presence or absence of a fault in the field circuit for the exciter winding 18. Such a fault is shown schematically as a broken line 68 to ground in Fig. 1.

In the event such a fault exists, the extremely high loading placed on the permanent magnet generator 14 will cause its output voltage to drop which in turn will cause a drastic decrease in power to the generator control unit power unit 34 as indicated by the block 70 in Fig. 3. Because of this, the power unit 34 cannot supply power to the microcomputer 32 and the inability of the latter to function without power releases the relay 26 allowing the contacts 26a, 26b and 26c to revert to their normally open condition. This is illustrated at block 72 in Fig. 3.

With the relay contacts 26a, 26b and 26c now open, the permanent magnet generator 14 is disconnected from the fault 68 and no longer is heavily loaded. Its voltage will accordingly increase and the power unit 34 is again able to supply normal operating voltage to the microcomputer 32. This is illustrated at block 74 in Fig. 3.

At this point, the power up reset routine 50 is repeated and following that, the non-volatile memory 48 is read as illustrated in block 52. Because the loop just traced included the writing of the protection flag in the non-volatile memory with no erasure of the same coupled with the fact that the non-volatile memory 48 will retain its memory state even in the absence of power, such as caused by the interruption due to the existence of a fault, the program will branch to the loop including the blocks 54 and 56 will remain there until such time as manually commanded by operation of the switch 40 to erase the protection flag. Accordingly, the relay 26 cannot be re-energized by the microcomputer 32 during such an occurrence without manual intervention and the faulted exciter field winding 18 cannot be reconnected to the permanent magnet generator. As a consequence, doorbelling is completely avoided.

In the more normal situation, where a field fault such as represented by the block 66 does not exist, the program will proceed to determine, at block 80, whether the prime mover 12 is still operating. If the prime mover continues to operate, a loop 82 back to the block 66 is executed and such loop will be continually executed so long as a field fault does not exist or the engine is not shut down. Conversely, if the engine is shut down, the program, at block 84, commands the erasure of the protection flag in the non-volatile memory 48 and with the power supply winding down with the prime mover, the relay 26 will be de-energized to open the contacts 26a, 26b and 26c as shown in block 86. This completes the program as shown at block 88.

In this more normal case, it will be seen that the system is made ready for a normal reinitiation when the next generating cycle is started. Specifically, because the protection flag is erased at the time of shutdown, when, after power up and reset at block 50, the program calls for reading the non-volatile member as at block 52, no protection flag will be found therein. The system may then proceed upon such normal startup in the manner outlined above.

From the foregoing, it can be appreciated that a generator control system and fault detection circuit made according to the invention provides fault detection for the generating system while eliminating the possibility of doorbelling. The system is particularly advantageous in that it does not require provision of an auxiliary power supply to operate the generator control unit 38 and the microcomputer 32 therein upon the occurrence of a fault which would render the microcomputer 32 incapable of operation due to insufficient power.

**Claims**

1. A fault protection control circuit for use in a generating system having an exciter (18), a permanent magnet generator (14) for providing electrical power to the exciter (18), an electrically controllable switch (26, 26a, 26b, 26c) for selectively connecting or disconnecting the permanent magnet generator (14) to or from the exciter (18), and comprising computing circuit means (32) for controlling the switch (26, 26a, 26b, 26c), the computing circuit means (32) being incapable of closing the switch (26, 26a, 26b, 26c) and connecting the exciter (18) to the permanent magnet generator (14) when a fault exists and the permanent magnet generator is heavily loaded, and characterised in that

the computing circuit means is powered by the permanent magnet generator (14),

the computing circuit means (32) is connected to the permanent magnet generator (14) independently of the switch (26, 26a, 26b, 26c),

the computing circuit means (32) has a memory device (48) whose state is unaffected by the presence or absence of power,

the memory device (48) is connected to be read, written or erased by the computing circuit means (32),

the computing circuit means a) at or near the beginning of the generating cycle of the system writes (62) in the memory device (48) a particular flag and b) upon the conclusion of the generating cycle erases (84) from the memory device the particular flag, and

the computing circuit measn (32) upon receiving power from the permanent magnet generator (14) following as a result of a fault a disconnection of the power supply to exciter (18) from the permanent magnet generator (14) reads (52) the memory device (48) for the particular flag and in the presence of the particular flag does not close the switch (26, 26a, 26b, 26c) and in the absence of the particular flag closes the switch (26, 26a, 26b, 26c).

2. A fault protection control according to claim 1 wherein the particular flag is erased from the memory device (48) following as a result of a fault the disconnection of the power supply to the exciter (18) from the permanent magnet generator (14) by manual means (40).

3. A fault protection control circuit according to claim 1 or claim 2 wherein the computing circuit means (32) is a microprocessor and the memory device (48) is an eraseable programmable read only memory.

**Patentansprüche**

1. Störschutzsteuerkreis zum Einsatz in einer Generatoranlage mit einem Erreger (18), einem Permanentmagnetgenerator (14) als Stromversorgung für den Erreger (18), einem elektrisch steuerbaren Schalter (26, 26a, 26b, 26c), durch den die Verbindung vom Permanentmagnetgenerator (14) zum Erreger (14) wahlweise hergestellt oder unterbrochen wird und einem Rechenorgan (32) als Steuerung für den Schalter (26, 26a, 26b, 26c), wobei bei Vorhandensein einer Störung und hoher Belastung des Permanentmagnetgenerators des Rechenorgan (32) nicht fähig ist, den Schalter (26, 26a, 26b, 26c) zu schließen und die Verbindung vom Permanentmagnetgenerator (14) zum Erreger (18) herzustellen, und dadurch gekennzeichnet dass

das Rechenorgan vom Permanentmagnetgenerator (14) mit Strom versorgt wird,

das Rechenorgan (32) unabhängig vom Schalter (26, 26a, 26b, 26c) mit dem Permanentmagnetgenerator (14) verbunden wird,

das Rechenorgan (32) eine Speichervorrichtung (48) aufweist, auf deren Status die An- oder Abwesenheit von Strom keinen Einfluß hat,

die Speichervorrichtung (48), wenn zugeschaltet, vom Rechenorgan (32) gelesen, beschrieben oder gelöscht wird,

das Rechenorgan a) bei oder direkt nach Beginn des Stromerzeugungszyklus der Generatoranlage ein besonderes Kennzeichen in die Speichervorrichtung (48) schreibt (62) und b) am Ende des Stromerzeugungszyklus das besondere Kennzeichen aus der Speichervorrichtung löscht (84), und

das Rechenorgan (32) bei Empfang von Strom vom Permanentmagnetgenerator (14) infolge einer störungsbedingten Unterbrechung der Stromzufuhr vom Permanentmagnetgenerator (14) zum Erreger (18) die Speichervorrichtung (48) nach dem besonderen Kennzeichen durchsucht (52) und bei Vorhandensein des besonderen Kennzeichens den Schalter (26, 26a, 26b, 26c) nicht schließt bzw. bei Nichtvorhandensein des besonderen Kennzeichens den Schalter (26, 26a, 26b, 26c) schließt.

2. Störschutzsteuerkreis gemäß Anspruch 1, wobei infolge einer störungsbedingten Unterbrechung der Stromzufuhr vom Permanentmagnetgenerator (14) zum Erreger (18) mittels eines handbetätigten Organs (40) das besondere Kennzeichen aus der Speichervorrichtung (48) gelöscht wird.

3. Störschutzsteuerkreis gemäß Anspruch 1 oder 2, wobei als Rechenorgan (32) ein Mikroprozessor und als Speichervorrichtung (48) ein löschbarer programmierbarer Festwertspeicher verwendet wird.

**Revendications**

1. Circuit de commande pour la protection contre des défauts destiné à être utilisé dans un système générateur ayant une excitatrice (18), une génératrice (14) à aimants permanents destinée à fournir de l'énergie électrique à l'excitatrice (18), un commutateur (26, 26a, 26b, 26c) pouvant être commandé électriquement, destiné sélectivement à connecter ou déconnecter la génératrice (14) à aimants permanents à ou de l'excitatrice (18), et comprenant des moyens (32) à circuit de calcul pour la commande du commutateur (26, 26a, 26b, 26c), les moyens (32) à circuit de calcul étant incapables de fermer le commutateur (26, 26a, 26b, 26c) et connecter l'excitatrice (18) à la génératrice (14) à aimants permanents lorsqu'un défaut existe et que la génératrice à aimants permanents est sous forte charge, caractérisé en ce que

les moyens à circuit de calcul sont alimentés par la génératrice (14) à aimants permanents,

les moyens (32) à circuit de calcul sont connectés à la génératrice (14) à aimants permanents indépendamment du commutateur (26, 26a, 26b, 26c),

les moyens (32) à circuit de calcul comprenent un dispositif (48) à mémoire dont l'état n'est pas affecté par la présence ou l'absence d'énergie,

le dispositif à mémoire (48) est connecté pour être lu, écrit ou effacé par les moyens (32) à circuit de calcul,

les moyens à circuit de calcul a) au, ou vers le, commencement du cycle de génération du système, écrivent (62) dans le dispositif à mémoire (48) un indicateur particulier et b) à la fin du cycle de génération, effacent du dispositif à mémoire l'indicateur particulier, et

les moyens (32) à circuit de calcul, en recevant de l'énergie de la génératrice (14) à aimants permanents à la suite, en conséquence d'un défaut, d'une déconnexion de l'alimentation en énergie de l'excitatrice (18) par la génératrice (14) à aimants permanents, lisent (52) dans le dispositif à mémoire (48) l'indicateur particulier et, en présence de l'indicateur particulier, ne ferment pas le commutateur (26, 26a, 26b, 26c) et, en l'absence de l'indicateur particulier, ferment le commutateur (26, 26a, 26b, 26c).

2. Circuit de commande pour la protection contre des défauts selon la revendication 1, dans lequel l'indicateur particulier est effacé du dispositif à mémoire (48) à la suite, en conséquence d'un défaut, de la déconnexion de l'alimentation en énergie de l'excitatrice (18) par la génératrice (14) à aimants permanents, par des moyens manuels (40).

3. Circuit de commande pour la protection contre des défauts selon la revendication 1 ou la revendication 2, dans lequel les moyens (32) à circuit de calcul comprennent un microprocesseur, et le dispositif à mémoire (48) est une mémoire morte programmable et effaçable.

FIG.1

FIG.2

FIG. 3